# EUROPEAN PATENT APPLICATION

(11) **EP 4 180 686 A1**
(43) Date of publication of application: **17.05.2023**
(21) Application number: 21208089.9
(22) Date of filing: 12.11.2021
(51) Int. Cl.: F16D 65/18, F16D 55/22

(54) **BRAKE ASSEMBLY, PISTON ACTUATOR FOR SUCH BRAKE ASSEMBLY AND VEHICLE WITH SUCH BRAKE ASSEMBLY**

(71) Applicant: KNORR-BREMSE Systeme für Nutzfahrzeuge GmbH, 80809 München (DE)
(72) Inventor: GEIS-ESSER, Daniel, 81377 München (DE); PESCHEL, Michael, 82296 Schöngeising (DE); BLESSING, Michael, 80687 München (DE); ADAMCZYK, Philipp, 82347 Bernried (DE); KLINGNER, Matthias, 82275 Emmering (DE); KRÜGER, Sven Philip, 81476 München (DE); SCHALLER, Sebastian, 86462 Langweid (DE); HÖS, Levente, 1047 Budapest (HU); GYÖRKE, Zsombor, 8360 Keszthely (HU); SZABO, Janos, 1101 Budapest (HU); MONORI, Gyula, 6065 Lakitelek (UG); MLINARCSEK, Csaba, 1165 Budapest (HU); KOKREHEL, Csaba, 1119 Budapest (HU); HEIGL, Korbinian, 85652 Pliening (DE); TOTH, Janos, 6000 Kecskemét (HU); SCHÖFBERGER, Tobias, 84048 Mainburg (DE); HOLLOSI, Mate, 1097 Budapest (HU); NAKAMURA, Tatsuro, 1027 Budapest (HU)

(57) **Abstract**

The present invention relates to a brake assembly (1), comprising:
a brake element (10) rotatably supported about a rotational axis (R),
at least one braking element (60, 60′, 60ʺ) configured to be movable towards a surface of the brake element (10) for applying a braking force on the brake element (10), and
a converter (30) rotatably supported about a converter rotational axis (RC) and configured to move the at least one braking element (60, 60′, 60ʺ) towards the surface of the brake element (10) in accordance with a rotational angle of the converter (30) with respect to the converter rotational axis (RC).

## Description

The present invention relates to a brake assembly, a piston actuator for such brake assembly and a vehicle comprising such brake assembly.

In vehicles, such as commercial vehicles, a pneumatic actuated disc brake is used as a mechanical friction brake. Such disc brake comprises a brake disc with an attached brake caliper including brake pads and a pneumatic actuator unit. Once the pneumatic actuator is pressurized, a piston inside the actuator is pressing the brake pads inside the caliper from both sides onto the brake disc.

The above described pneumatic actuated disc brake requires a lot of installation space. Especially with respect to the installation space of upcoming E-axles for electrically powered vehicles, the installation space for the pneumatic actuated disc brake becomes further restricted. In other words, installation space required for axles may get in conflict with the installation space required for disc brake.

Therefore, it is an object of the present invention to provide a brake assembly, a piston actuator for such brake assembly and a vehicle with such brake assembly capable of providing a reduced installation space required for the brake assembly.

The object is solved by the subject-matter of the independent claims. Further aspects of the present invention are subject to the dependent claims.

According to the present invention, a brake assembly comprises a brake element rotatably supported about a rotational axis, at least one braking element configured to be movable towards a surface of the brake element for applying a braking force on the brake element, and a converter rotatably supported about a converter rotational axis and configured to move the at least one braking element towards the surface of the brake element in accordance with a rotational angle of the converter with respect to the converter rotational axis.

The brake assembly may be a disc brake assembly with a brake disc as brake element and a brake pad as braking element. In such configuration, the at least one braking element or brake pad, respectively, may be arranged to be moved at least towards a surface of the brake element or brake disc, respectively, which extends in a radial direction with respect to the rotational axis of the brake disc.

Alternatively, the brake assembly may be a drum brake assembly with a brake drum as brake element and a brake shoe as braking element. In such configuration, the at least one braking element or brake shoe, respectively, may be arranged to be moved at least towards a surface of the brake element or brake drum, respectively, which extends in an axial direction with respect to the rotational axis of the brake drum, preferably an inner surface of the brake drum enclosing the rotational axis.

When the at least one braking element is moved towards the brake element, the at least one braking element gets in contact with the brake element to apply the braking force on the brake element. The braking force increases with the at least one braking element being moved closer to the brake element after a first contact. Even though the movement of the at least one braking element is described as movement towards the brake element, the at least one braking element is preferably also movable in the opposite direction to reduce a braking force already applied or to move the at least one braking element out of contact from the brake element. Such reverse movement may be implemented by a spring mechanism, the converter and or other components of the brake assembly.

The converter converts its rotational movement into a movement of the at least one braking element towards the brake element. The converter may thereby be configured to move the at least one braking element in direct contact therewith or indirectly by a transfer member or transfer mechanism arranged between the converter and the at least one braking element. However, irrespective of a direct or indirect actuation of the at least one braking element by the converter, the movement of the at least one braking element towards the brake element is mainly dependent on the configuration of the converter and therefore a rotational angle of the converter with respect to the converter rotational axis. In other words, the movement of the at least one braking element towards the brake element is mainly dependent on the angular position of the converter with respect to the converter rotational axis. Preferably, the converter rotational axis is coaxially aligned with the rotational axis of the brake element. However, the converter rotational axis may also be eccentric and/or inclined with respect to the rotational axis of the brake element.

Since the converter actuates the at least one braking element by a rotational movement rather than by a translational movement, the installation space required may be at least reduced in an actuating or movement direction of the at least one braking element. For example, an extension of the converter in the actuating or movement direction of the at least one braking element may be mainly restricted to a predetermined moving distance of the at least one braking element to apply the braking force to the brake element. As the converter may be arranged in series with the brake element and/or the at least one braking element in the axial direction with respect to the rotational axis of the brake element, the brake assembly may require only a reduced installation space in the axial direction by the converter not acting as a translational movement mechanism, such as pistons or the like. If the converter rotational axis is coaxially oriented or oriented in parallel to the rotational axis of the brake element, a driving device may be arranged to execute a driving movement in a plane oriented perpendicular to the converter rotational axis. Therefore, the extension of the brake assembly in the direction of the rotational axis can be reduced and therefore, installation space requirements are also reduced.

In some embodiments, the converter is configured to transfer its rotational movement into a translational movement of the at least one braking element.

Accordingly, the rotational movement of the converter may move the at least one braking element translationally towards the brake element in a direction in parallel to the rotational axis of the brake element. For example, at least one brake pad of a disc brake may thereby be moved to the radial surface of the brake disc extending in the radial direction with respect to the rotational axis to apply a braking force to the brake disc substantially homogenously. Alternatively, the rotational movement of the converter may move the at least one braking element translationally towards the brake element in a direction perpendicular or with at least a motion component in the perpendicular direction to the rotational axis of the brake element. For example, at least one brake shoe of a drum brake may thereby be moved to the inner axial surface of the brake drum to apply a braking force to the brake drum substantially homogenously. In a further alternative, the converter is configured to move the at least one braking element translationally towards the brake element in another direction with respect to the rotational axis of the brake element depending on the shape and/or position of the contact surfaces of the at least one braking element and surface of the brake element to receive the braking force by the at least one braking element for a substantially homogenous application of force or another predetermined application of force.

Alternatively or in addition, the converter may be configured to transfer its rotational movement into a rotational movement of the at least one braking element. For example, the at least one braking element may be rotatably supported about a braking element pivot to be pivoted about the braking element pivot to be moved towards the brake element. The movement of the at least one braking element may also be composed of rotationally and translationally movements.

In some embodiments, the brake assembly comprises a lever mechanism rotatably supported about a stationary lever pivot, comprising at least one driving lever configured to engage at least one engaging member of the converter to transfer a rotational movement of the driving lever in a rotational movement of the converter. Preferably, the driving lever is configured to provide a changing, in particular an increasing or decreasing, preferably a progressively or linearly increasing or decreasing, transmission ratio between a driving lever input force and a driving lever output force. That means, in particular, that the driving lever input force, which is input in the lever mechanism, preferably via a driven lever as mentioned below, is transmitted according to the transmission ratio into the driving lever output force acting on the engaging member.

In such configuration, the converter is driven by the at least one driving lever of the lever mechanism. With the lever mechanism being rotatably supported about the stationary lever pivot, the driving lever is also rotatably supported about the stationary lever pivot. The stationary lever pivot is, for example, attached to or comprised by a carrier member or a housing being stationary with respect to the brake disc rotatably supported about the rotational axis and the converter rotatably supported about the converter rotational axis. Accordingly, a rotational movement of the driving lever results in a rotational movement of the converter, when the driving lever engages the at least one engaging member of the converter. Such engagement may be dependent on an angular position or angular position range, respectively, of the driving lever. For example, the length of the driving lever and/or position of the stationary lever pivot and/or the engaging member are/is set so that the driving lever only engages the engaging member over a certain rotational angle range of the driving lever, in particular of 45°. Alternatively, the driving lever may be connected to the at least one engaging member of the converter as a constant engagement to transfer any rotational movement of the driving lever in a translational movement of the converter.

A driving lever portion to engage the at least one engaging member of the converter may comprise a cam or other type of control slide to provide a changing transmission ratio depending on the rotational angle of the driving lever. Due to the driving lever portion configured as cam or control slide, respectively, the driving lever may provide a progressively increasing transmission ratio on the converter unit. Accordingly, the driving lever is configured to provide a progressively increasing transmission ratio between the driving lever input force and the driving lever output force when driving the driving lever in a braking direction for activating the brake by engaging the brake element with the at least one braking element. However, the driving lever may also be configured to provide a linear increasing transmission ratio. The same principles are transferable to a configuration to provide a decreasing transmission ratio.

Alternatively, the driving lever portion to engage the at least one engaging member of the converter and the at least one engaging member of the converter engaged or to be engaged by the driving lever portion may form a gear transmission with respective gears comprised by the driving lever portion and the engaging member, respectively, meshing with each other.

Instead of driving the converter unit by the driving lever, the converter unit may be directly driven by a cam, cam disk or gear drive. The same principles with respect to the transmission ratio may also apply for such direct drive.

In some embodiments, the engaging member or the driving lever comprises a projection, preferably a pin, or a recess, and/or a rolling member for engaging the driving lever or the engaging member.

For example, the projection protrudes from the surface of the converter facing the driving lever. Specifically, the projection protrudes from a surface of the converter facing an extension of the driving lever in a radial direction with respect to the stationary lever pivot. Accordingly, the projection is configured to be engaged or caught by the driving lever at least in a predetermined angular position or angular position range. Such projection may be simply a pin but may also provide another shape dependent on the engagement mechanism. Furthermore, the projection may comprise a rolling member to allow the rolling member to scroll on the driving lever during engagement to reduce friction during the common respective rotational movement of the driving lever and converter. For example, a hollow cylinder may be centered on and rotatably supported about a pin to form the rolling member of the projection. Alternatively, other types of bearings or the like may be comprised by the projection to provide such functionality.

Alternatively, the engaging member of the converter may be a recess with the driving lever engaging such recess, for example, by a lever projection extending in a direction towards such recess. For example, the lever projection of a part thereof may be biased in such direction to allow an engagement at least in a predetermined angular position or angular position range.

In variants, the driving lever comprises a projection to engage with a recess or projection of the converter as respective engaging members.

In some embodiments, the lever mechanism further comprises a driven lever. The driven lever is preferably rotatably supported about the stationary lever pivot with the driving lever attached to the driven lever in a fixed position relationship to be driven by the driven lever about the stationary lever pivot, wherein the driven lever is preferably driven by a translational driving device. Alternatively, the driven lever is preferably rotatably supported about a driven lever rotational axis in operative engagement with the driving lever, in particular with the driven lever configured to provide a changing, in particular an increasing or decreasing, preferably a progressively or linearly increasing or decreasing, transmission ratio between the driven lever input force and the driven lever output force, wherein the driven lever is preferably driven by a translational driving device.

In the configuration with the driven lever attached to the driving lever in a fixed position relationship, the driving lever is driven by the driven lever with both levers in a constant positional relation rotatably supported about the stationary lever pivot. Since the driven lever is driven by a translational driving device, a translational movement or actuation of the translational driving device or part thereof affecting the driven lever results in a rotational movement of the driven lever and, hence, of the driving lever about the stationary lever pivot to transfer the driving lever rotational movement in a rotational movement of the converter. The driving lever may be attached to the driven lever by a form-fit and/or force-fit connection or it may be firmly bonded thereto. Alternatively the driving lever may be attached to the driven lever in terms of the driving lever and the driven lever being integrally formed with each other. In a variant, the driving lever also operates as driven lever by being rotatably supported about the stationary lever pivot with the translational driving device driving the driving lever to rotate about the stationary lever pivot.

Alternatively, the driven lever actuates a rotational movement of the driving lever by a driven lever portion in operative engagement with the driving lever, such as a cam, other type of control slide or a gear. The driven lever portion to engage the driving lever may comprise a cam or other type of control slide to provide a changing transmission ratio depending on the rotational angle of the driven lever. Due to the driven lever portion configured as cam or control slide, respectively, the driven lever may provide a progressively increasing transmission ratio on the driving lever. Accordingly, the driven lever is configured to provide a progressively increasing transmission ratio between the driven lever input force and the driven lever output force when driving the driving lever in a braking direction. However, the driven lever may also be configured to provide a linear increasing transmission ratio. The same principles are transferable to a configuration to provide a decreasing transmission ratio.

Alternatively, the driven lever portion to engage the driving lever and the driving lever engaged or to be engaged by the driven lever portion may form a gear transmission with respective gears comprised by the driven lever portion and the driving lever, respectively, meshing with each other.

Alternatively, the driving lever may be driven by an electric motor or other rotational actuating means to drive the driving lever about the stationary lever pivot. However, the translational driving device actuating a driven lever to drive the driving lever may allow an increased flexibility to arrange the different components, in particular, with respect to different installation space constraints.

In some embodiments, the translational driving device comprises a translational driving member and one end of the driven lever opposed to the stationary lever pivot is rotatably attached thereto by a driven lever translational driving device pivot, and wherein the translational driving device is further rotatably supported by a stationary translational driving device pivot to be rotatably supported about the stationary translational driving device pivot.

Accordingly, the translational driving device or the translational driving member to be translationally moved, respectively, is connected to the driven lever by the driven lever translational driving device pivot. Therefore, the translational driving device and the driven lever are in constant engagement by the respective connection with the ability for a relative rotational movement about the driven lever translational driving device pivot with respect to each other. Such configuration may ease a bidirectional movement of the driven lever, therefore the driving lever and consequently the converter, when the translational driving device or the translational driving member to be translationally moved, respectively, is bidirectionally moved in the translational direction.

Alternatively, the translational driving device may be configured to actuate the driven lever upon engagement during its translational movement with a portion or end of the driven lever arranged in the moving path of the translational driving device or the translational driving member as part thereof to be translationally moved, respectively. In other words, the translational driving device may not be connected to the driven lever as described above but in engagement over at least a predetermined translational driving range of the translational driving device. A bidirectional movement of the driven lever, and hence, of the driving lever and consequently of the converter may be also implemented in such configuration without the described connection but with the translational driving device only actuating the driven lever along its translational moving path without being affixed to each other. However, design requirements to ensure such bidirectional movement may increase. On the other hand, such configuration may allow to ease a replacement of components or an adaption with respect to different size configurations or tolerances.

With the driven lever being connected or in engagement with the translational driving member while being rotationally supported about the stationary lever pivot, the connection or point of engagement may be moved by a rotational movement of the driven lever about the stationary lever pivot in a direction different from the direction of the translational movement by the translational driving member. To compensate for such displacement of the connection or point of engagement, the translational driving device is rotatably supported by the stationary translational driving device pivot. In other words, the stationary translational driving device pivot allows the translational driving device to be moved rotationally in accordance with the displacement of the connection or point of engagement to ensure the rotational movement of the driven lever in contact with the translational driving device or the translational driving member, respectively. However, the translational driving device is still intended to provide a translational actuation of the driven lever, even though the translational driving device may perform a rotational evasive movement due to the displacement of the connection or point of engagement with the driven lever due to its rotation caused by the translation. In other words, the translational driving device provides a translational actuation of the driven lever, while the driven lever may cause a rotational movement of the translational driving device in response to the translational actuation.

In some embodiments, the translational driving device is a piston actuator, preferably a pneumatic and/or spring loaded piston actuator and/or an electro-mechanic linear actuator.

The piston actuator may comprise an actuator piston as translational driving member. The use of the piston actuator may allow an easy implementation of the translational driving device. Pneumatic and/or spring loaded piston actuators may further support such easy implementation. The piston actuator may also be a hydraulic piston actuator or a spring loaded hydraulic piston actuator, respectively. Further, piston actuators may provide advantages with respect to weight and/or installation space. However, other linear drives, such as spindle drives or linear actuators, may also serve as translational driving devices.

With the piston actuator as translational driving device configured as spring loaded pneumatic or spring loaded hydraulic piston actuator, the brake assembly may operable as a parking or fixing brake of a vehicle. Accordingly, the spring loaded pneumatic or spring loaded hydraulic piston actuator may be configured to move the actuator piston in an extended position in the translational movement direction to actuate the driven lever and therefore the converter to apply a braking force on the brake element via the at least one braking element, when a force caused by the pneumatic or hydraulic pressure falls below a counteracting spring force. In turn, the spring loaded pneumatic or spring loaded hydraulic piston actuator may retract the actuator piston upon fluidic, specifically pneumatic or hydraulic pressurization resulting in a force exceeding the counteracting spring force. In accordance with such retraction, the braking force on the brake element may be reduced or cancelled. Even though the described functionality may be advantageous with respect to parking or fixing brake operations, such configuration may also be used alternatively or in addition for service brake operations.

Alternatively or additionally, the translational driving device may be the electro-mechanic linear actuator to provide a translational movement.

In some embodiments, the converter comprises a control slide, preferably a wedge member and/or a ball ramp mechanism, and/or a toggle lever mechanism to transfer its rotational movement into the movement of the at least one braking element, and is preferably configured to transfer its rotational movement into the movement of the at least one braking element for a force increase or decrease, preferably a progressive or linear force increase or decrease, from the at least one braking element on the brake element in accordance with a rotational angle of the converter with respect to the converter rotational axis.

The control slide may provide at least partially a topography in an actuating direction to actuate the at least one braking element to move towards the brake element. Accordingly, a point of impact of the control slide and therefore the converter on the at least one braking element or on a transfer member to transfer the actuation by the control slide to the at least one braking element may move in the actuating direction in accordance with the topography. For example, the converter may be rotationally supported about the converter rotational axis in parallel to the actuating direction with the topography of the control slide facing the at least one braking element or the transfer member in the actuating direction. In accordance with a rotational angle of the converter, the topography of the control slide actuates the at least one braking element or the transfer member in the actuating direction in accordance with a displacement of the point of impact of the control slide due to the topography being at least effective in a predetermined angular position or over a predetermined angular position range of the converter. The topography is therefore a surface of different heights in the actuating direction to transfer the rotational movement of the converter in a movement of the at least one braking element towards the brake element. The topography may only extend partially while other portions of the converter or control slide, respectively, may provide a constant height in the actuating direction to maintain the positional relationship between the at least one braking element and the brake element even if the converter is further rotationally moved over a corresponding range of angular positions.

The control slide may be a wedge member with the topography provided by a wedge surface with increasing height in the actuating direction to form the wedge. The wedge surface in contact with the at least one braking element or the transfer member thereby provides an advancing movement of the at least one braking element towards the brake element, when the converter is rotated to move the wedge surface in a direction with increasing height of the wedge surface. The wedge surface may be a straight inclined surface, a stepped surface or a curved surface. Preferably, the height of the wedge surface may increase continuously to improve a smooth sliding of the control slide on the at least one braking element or the transfer member.

Alternatively or in addition, the control slide may comprise a ball ramp mechanism with a ball guided between the control slide and the at least one braking element or the control slide and the transfer member in at least one ball track with a topography in the actuating direction. The at least one ball track may be provided by the control slide and/or the at least one braking member and/or the transfer member. In such configuration, the ball may provide different distances between the control slide and the at least one braking element or the control slide and the transfer element in the actuating direction in accordance with the position of the ball on the topography of the ball track. Since the converter is rotationally supported about the converter rotational axis but stationary in an axial direction with respect to the converter rotational axis, the ball ramp mechanism moves the at least one braking element towards the brake element, when the distance between the control slide and the at least one braking element or the control slide and the transfer element in the actuating direction is increased by the ball guided in the at least one ball track.

Similar as for the wedge surface of the wedge member, the ball track may comprise a guiding surface in the actuating direction formed as a straight inclined surface, a stepped surface or a curved surface. Preferably, the height or depth, respectively, of the guiding surface may increase continuously to improve a smooth sliding of the ball within the ball track. The at least one ball track may be curved in a plane perpendicular the converter rotational axis to allow a lateral guiding of the ball in the at least one ball track during a rotational movement of the converter.

Alternatively or in addition, the converter comprises a toggle lever mechanism to transfer the rotational movement of the converter into a movement of the at least one braking element towards the brake element. For example, two toggle levers are connected by a hinge to be spread apart or contracted in the actuating direction of the at least one braking element or the transfer member to move the at least one braking element towards the brake element. One end or portion of one of the toggle levers opposed to the hinge may be connected to or engageable with the at least one braking element or the transfer member, while one end or portion of the other toggle lever opposed to the hinge rests against a stationary support, for example, a portion of a brake caliper as described later. Spreading and contracting of the toggle levers may be performed by a rotational movement of the converter with a toggle lever actuator, for example, a toggle lever actuator stem with one end articulated attached to the hinge and the other end articulated attached to the converter. The converter rotational axis may therefore be offset from an axis extending through the respective ends of the two toggle levers representing the actuating direction of the toggle lever mechanism.

Preferably, the converter and therefore the control slide and/or the toggle lever mechanism is/are configured to provide a progressive force increase acting from the at least one braking element on the brake element in accordance with a rotational angle of the converter with respect to the converter rotational axis. Accordingly, the control slide and/or the toggle lever mechanism is/are configured to progressively increase the braking force with an advanced rotational movement of the converter in a rotational direction of advancing the movement of the at least one braking element towards the brake element. The force increase of the braking force is therefore preferably not linear but progressive. However, the force increase may also be linear. The same principles apply for a respective force decrease.

In some embodiments, the converter is a ring actuator with the at least one braking element being arranged between an annular surface of the ring actuator and the brake element.

The converter as ring actuator provides a substantially annular shape. However, the ring actuator may not necessarily be formed as continuous ring but may also only represent a part thereof as a ring section. A ring actuator formed as continuous ring may provide a relatively higher stiffness, while a ring section as ring actuator may provide positive weight effects. In other words, the ring actuator may at least represent an annular shape of an angular range sufficient to actuate the at least one braking element over a predetermined moving distance and/or to actuate more than one braking element arranged between the annular surface of the ring actuator and the brake element. An annular surface of the ring actuator is a surface extending in a radial direction with respect to the converter rotational axis with the ring or ring section being curved towards the converter rotational axis. Consequently, a ring actuator comprises two opposed annular surfaces with the at least one of the braking elements being arranged between one of the annular surfaces of the converter and the brake element.

For example, the brake element may be a brake disc with at least one brake pad as the at least one braking element facing a radial surface of the brake disc with respect to the rotational axis of the brake disc. In the event that the converter acts directly on the at least one brake pad, the annular surface of the converter faces the at least one braking element with the control slide and/or toggle lever mechanism arranged on said surface. The ring actuator may at least extend over an angular range to allow the at least one brake pad to be sufficiently moved towards the brake disc by rotation of the converter. The converter rotational axis of ring actuator as converter may be arranged coaxially with the rotational axis of the brake disc. Accordingly, the ring actuator may be implemented as compact converter with good accessibility to the brake disc and other components of the brake assembly. However, the converter rotational axis of the ring actuator or converter, in general, may also be offset from the rotational axis of the brake member or inclined thereto.

In some embodiments, the brake element comprises a brake disc and the brake assembly comprises at least one brake caliper to support at least two braking elements with at least one of the at least two braking elements being arranged on one side of the brake disc and at least another one of the at least two braking elements being arranged on the opposed side of the brake disc, wherein the brake assembly is configured to move the at least two braking elements simultaneously towards the respective surface of the brake disc due to the configuration of the caliper, by one converter transferring its rotational movement into the translational movement of the at least two braking elements or by at least two converters, each of which being driven by the same or a separate, preferably an independent lever mechanism, transferring their rotational movement into the translational movement of a respective one of the at least two braking elements assigned thereto.

The at least one brake caliper is a stationary component to support at least two braking elements or brake pads, respectively, arranged on different radial sides of the brake disc with respect to the rotational axis of the brake disc. To simultaneously apply a braking force to the brake disc by the at least two braking elements, the at least two braking elements may be moved simultaneously towards the respective radial surfaces of the brake disc. Such simultaneous movement may be executed due to the configuration of the caliper. For example, the brake caliper may be configured as floating caliper with a first caliper portion facing one of the radial surfaces of the brake disc with one of the at least two braking elements arranged therebetween. Further, such floating caliper comprises a second caliper portion facing an opposite radial surface of the brake disc with the other one of the at least two braking elements arranged therebetween. At least one converter may be arranged between the first caliper portion and the respective braking element. With a rotational movement of the at least one converter to move the respective braking element associated with one radial surface of the brake disc towards the surface, the first caliper portion may also come in contact with the at least one converter and may thereby tend to move in an opposite direction with respect to the movement of the respective braking element, which results in an actuation of the second caliper portion to move the other respective braking element towards the brake disc. Such effect may be further supported or alternatively applied by the converter comprising control slides and/or toggle lever mechanisms on both radial surfaces of the converter with respect to the converter rotational axis opposed to each other with a control slide and/or toggle lever mechanism on the one radial surface of the converter acting on the respective braking element and the other control slide and/or toggle lever mechanism acting on the respective caliper portion. Instead of two separate toggle lever mechanisms also a common toggle lever mechanism may be used to act on the respective braking element as well as on the respective caliper portion.

Alternatively or in addition, a simultaneous movement of the at least two braking elements towards the brake disc may be provided by one converter acting on the at least two braking elements simultaneously. For example, the converter may be formed by two ring actuators connected to each other by at least one bridging member with the each ring actuator being arranged between a respective caliper portion facing the brake disc and a respective one of the braking elements. Due to the bridging member, a rotational movement of one of the ring actuators also provides a rotational movement of the other ring actuator. The rotational movement may alternatively be initiated by the bridging member to rotate both ring actuators. Such arrangement is not restricted to ring actuators and the actuating portions of the converter acting on opposite sides of the brake disc may be of different shapes as long as being connected to a bridging member to be driven together.

Alternatively to the one converter acting on both sides of the brake disc to transfer a rotational movement thereof into the simultaneous translational movement of the at least two braking elements, at least two separate converters may be provided. The two separate converters may comply with the above described configurations with respect to one converter but without a respective bridging member. For example, the previously described ring actuators facing respective radial surfaces of the brake disc are separate converters. Each of the converters may be driven by the same driving mechanism, such as the same lever mechanism engaging with a respective engaging member of the respective converters. Alternatively, each of the converters may comprise a separate driving mechanism, such as separate lever mechanisms. The separate lever mechanisms may be actuated or controlled simultaneously move both of the separate converters. Preferably, the separate driving or lever mechanisms may be independently actuated or controlled, for example, to provide different degrees of actuation of the separate converters to compensate for tolerances and/or wear.

In some embodiments, the brake element comprises a brake disc and the brake assembly comprises at least two braking elements being arranged on the same side of the brake disc, wherein the brake assembly is configured to move the at least two braking elements simultaneously towards the surface of the brake disc by one converter transferring its rotational movement into the translational movement of the at least two braking elements or by at least two converters, each of which being driven by the same or a separate, preferably an independent lever mechanism, transferring their rotational movement into the translational movement of a respective one of the at least two braking elements assigned thereto.

In the given configuration, the at least two braking elements are not arranged on opposite sides of the brake disc but on the same side. Preferably, the at least two braking elements one the same side of the brake disc are evenly distributed over the respective surface of the brake disc. For example, the at least two braking elements are arranged on a side of radial surface of the brake disc distributed along a circumferential direction of the brake disc in substantially equal distances to each other. In the event of two braking elements the distance of the braking elements is substantially 180°, with three braking elements substantially 120° and so on. The term substantially is directed to the fact that an even distribution of the braking elements may reduce the risk of a tilting torque on the brake disc. However, the avoidance of a tilting torque may be to some extent tolerant with respect to slight differences from an exact equal distribution. Furthermore, design constraints may have to be considered with respect to such distribution.

The at least two braking elements may be simultaneously moved towards the surface of the brake disc by one converter transferring its rotational movement into the translational movement of the at least two braking elements to provide a homogenous application of the braking force on the radial surface of the brake disc and/or to avoid or at least reduce a tilting torque. The converter may therefore be configured to face both of the at least two braking elements over a range of rotational positions of the converter for a predetermined movement of the at least two braking element towards the radial surface of the brake disc.

Alternatively, the brake assembly with at least two braking elements on the same side of the brake disc may comprise at least two converters, each associated with at least one of the at least two braking elements. Similar as for the at least two braking elements being arranged on opposite sides of the brake disc, each of the two converters may be driven by the same driven mechanism, such as the lever mechanism, or separate ones. The separate driving mechanisms or lever mechanisms, respectively, may be actuated and/or controlled simultaneously or independently. An independent actuation and/or control may provide the same advantages as previously described with respect to the at least two braking elements arranged on opposite sides of the brake disc.

The principles of the simultaneous movement of at least two braking elements on opposed sides of the brake disc and at least two braking elements on the same side of the brake disc may be combined. For example, one or two converters may simultaneously act on at least two braking elements on the same side of the brake disc, wherein each of the two braking elements is associated with a brake caliper to support at least a further braking element on an opposed side of the brake disc to be moved simultaneously as previously described.

In another aspect, the present invention relates to a piston actuator for a brake assembly as described above, wherein the piston actuator comprises an actuator piston as the translational driving member.

Accordingly, the actuator piston provides a translational movement to be transferred on the driven lever for a rotational movement of the driven lever and therefore for a rotational movement of the driving lever about the stationary lever pivot. Thereby, the translational movement of the actuator piston indirectly drives a rotational movement of the converter to transfer the rotational movement of the converter on the at least one braking element to be moved towards the brake element.

The following description of aspects and embodiments of the piston actuator may also apply irrespective of a concrete brake assembly. Accordingly, the piston actuator represents an independent inventive concept, with each of the respective features and combinations thereof are to be recognized as independent from the brake assembly. In other words, the piston actuator may advantageously serve as a translational driving device for the described brake assembly but is not limited to such use.

Further, as the piston actuator may be applied to the previously described brake assembly, any feature of the piston actuator may also apply for the brake assembly with such piston actuator.

In some embodiments, the piston actuator comprises a piston actuator housing with an interior volume extending in a translational movement direction of the actuator piston with respect to a first piston actuator pivot as the stationary translational driving device pivot, wherein the interior volume is separated in the translational movement direction by a partition wall in an actuator piston receiving portion for at least partially accommodating the actuator piston and in an actuator piston driving piston receiving portion for at least partially accommodating an actuator piston driving piston configured to drive the actuator piston in a serial arrangement with respect to the translational movement direction.

The actuator piston may be translationally movable in the translational movement direction by being at least partially movable relative to the actuator piston receiving portion in the translational movement direction. The actuator piston extends through the piston actuator housing in the translational movement direction to be connected or to come in engagement with a member to be driven by the actuator piston, such as the driven lever of the lever mechanism. The opening for the actuator piston extending through the piston actuator housing and therefore beyond the piston actuator housing may be sealed to the actuator piston to allow a relative movement in the translational movement direction but to seal the actuator piston receiving portion against a pressure exchange and/or environmental influences.

Alternatively, the actuator piston may be stationary positioned within the actuator piston receiving portion. In such configuration, a translational movement of the actuator piston requires a translational movement of the piston actuator housing. In such configuration, a connection or engagement of the position actuator with a member to be driven by the piston actuator, such as the driven lever of the lever mechanism may also be provided by the piston actuator housing instead of the actuator piston, if the piston actuator housing is moveable in the translational movement direction.

The partition wall may be a continuous impermeable wall to hermetically seal the interior volume of the actuator piston receiving portion from the interior volume of the actuator piston driving piston receiving portion. Alternatively, the partition wall may be configured as impermeable wall with a through opening to allow the actuator piston driving piston to pass through the partition wall to drive the actuator piston in the translational movement direction when the actuator piston driving piston is configured for a relative movement with respect to the piston actuator housing in the translational movement direction. In both configurations, the partition wall may also be configured to only provide a piston stop for the actuator piston and/or actuator piston driving piston without the requirement of being continuous and/or impermeable to seal the interior volume of the actuator piston receiving portion from the interior volume of the actuator piston driving piston receiving portion.

With the piston actuator comprising the first piston actuator pivot as stationary pivot, a relative movement of the actuator piston with respect to the piston actuator housing comprising the first piston actuator pivot or of the piston actuator housing with respect to the actuator piston driving piston comprising the first piston actuator pivot may result in a translational movement of the actuator piston with respect to the first piston actuator pivot. Accordingly, the actuator piston may perform a direct or indirect translational movement in the translational movement direction.

For example, for a service braking action, the interior volume of the respective actuator piston receiving portion between the actuator piston and the respective partition wall may be pressurized to move the actuator piston in the translational movement direction away from the respective partition wall to extend.

In some embodiments, the piston actuator comprises at least one spring member and the actuator piston driving piston receiving portion is configured to be pressurized to move the actuator piston driving piston against a spring force by the at least one spring member in the translational movement direction, wherein the piston actuator is configured to extend the actuator piston with respect to the first piston actuator pivot in the translational movement direction when a force in the translational movement direction resulting from the pressure in the actuator piston driving piston receiving portion falls below the spring force in the translational movement direction.

The spring member may, for example, bias the actuator piston driving piston in the translational movement direction to extend the actuator piston with respect to the first piston actuator pivot. With a pressurization of the actuator piston driving piston receiving portion, the actuator piston driving piston is moved in an opposite direction to the biasing force by the spring member, when the force resulting from such pressurization exceeds the spring force of the spring member in such direction. The actuator piston can thereby be retracted with respect to the first piston actuator pivot. Consequently, such configuration allows a bidirectional movement of the actuator piston with respect to the first piston actuator pivot in the translational movement direction.

According to the bidirectional movement of the actuator piston with respect to the first piston actuator pivot in the translational movement direction based on the spring member and the pressurization of the actuator piston driving piston receiving portion, the piston actuator may be a pneumatic or hydraulic piston actuator.

With the above principle, a spring-loaded piston actuator may be provided with the actuator piston driving piston as spring-loaded actuator thereof. Preferably, as described above, the spring-loaded actuator piston driving piston is configured to actuate the actuator piston to move the at least one converter to apply a braking force on the brake element by the at least one braking element, when the force resulting from a pressurization of the actuator piston driving piston receiving portion or a respective release of pressure is or falls below the spring force of the spring member in such direction. The spring-loaded actuator piston driving piston therefore provides a passive braking concept. In turn, the spring-loaded actuator piston driving piston may provide an active braking concept, by applying the reverse principle of actuating the actuator piston to move the at least one converter to apply a braking force on the brake element by the at least one braking element, when the force resulting from a pressurization of the actuator piston driving piston receiving portion exceeds the spring force of the spring member in such direction. According to an exemplary embodiment of such configuration, the spring member may bias the actuator piston driving piston in the translational movement direction to retract the actuator piston with respect to the first piston actuator pivot.

In some embodiments, an actuator piston driving piston stem of the actuator piston driving piston extends through the piston actuator housing opposite to the partition wall in the translational movement direction with at least one actuator piston driving piston stop protruding outside the piston actuator housing in a radial direction with respect to the translational movement direction and extending beyond the piston actuator housing in the radial direction, and
wherein the piston actuator housing comprises at least one piston actuator housing stop protruding in the radial direction with respect to the translational movement direction and facing the at least one actuator piston driving piston stop in the translational movement direction, and
wherein the at least one spring member is arranged between the at least one actuator piston driving piston stop and the at least one piston actuator housing stop.

The above configuration allows a comparably compact design with respect to the length of the piston actuator in the translational movement direction as the spring member is not arranged in series with the actuator piston driving piston and the actuator piston in the translational movement direction but in parallel thereto.

In some embodiments, an actuator piston driving piston stem of the actuator piston driving piston extends through the partition wall to contact and move the actuator piston in the translational movement direction upon a translational movement of the actuator piston driving piston in the translational movement direction.

For example, the actuator piston driving piston may be arranged in the actuator piston driving piston receiving portion to be at least partially moveable therein in the translational movement direction. The actuator piston driving piston may comprise an actuator piston driving piston area with the actuator piston driving piston stem protruding therefrom in the translational movement direction towards the partition wall to pass therethrough. The actuator piston driving piston area may be configured to extend in a radial direction with respect to the translational movement direction to provide a sealed interior volume between the partition wall and the actuator piston driving piston area radially enclosed by the piston actuator housing. The interior volume formed thereby may be pressurized to provide a compression force on the actuator piston driving piston area in the translational movement direction in a direction away from the partition wall. A spring member may be arranged between an opposite side of the actuator piston driving piston area in the translational movement direction and an interior wall or stop opposite to the actuator piston driving piston area in the translational movement direction. The spring member may be a compression spring with the spring force acting in the translational movement direction. A respective translational movement of the actuator piston driving piston may be based on a force ratio of the compression force and spring force acting in opposite directions. With the compression force being lower than the spring force, the actuator piston driving piston is moved in direction towards the actuator piston, thereby extending the actuator piston with respect to the first piston actuator pivot. In turn, with the compression force being higher than the spring force, the actuator piston driving piston is moved in the translational movement direction in direction away from the actuator piston. The actuator piston may thereby be retracted with respect to the first piston actuator pivot, either by being connected to the actuator piston driving piston or by another spring member in the actuator piston receiving portion acting on the actuator piston in a direction towards the partition wall.

In another aspect, the present invention relates to a vehicle comprising a brake assembly as previously described, wherein the vehicle is preferably configured as a commercial vehicle, a truck, a trailer, a bus and/or as a combination of a towing vehicle and a trailer, and/or wherein the vehicle preferably comprises a pure electric, a hybrid or a conventional powertrain.

The brake assembly is advantageously applied for such vehicles according to the characteristic installation space constraints.

Further advantages, aspects and details of the invention are subject to the claims, the following description of exemplary embodiments applying the principles of the invention, and the respective exemplary drawing.
**Figure 1A** is a lateral view of a brake assembly according to an exemplary embodiment of the present invention in a first operating mode;
**Figure 1B** is a lateral view of the brake assembly according to Figure 1A in a second operating mode;
**Figure 2A** is a top view of a converter and braking element according to a first exemplary embodiment;
**Figure 2B** is a cross-sectional view of the converter and braking element according to Figure 2A with respect to a view A-A as indicated in Figure 2A;
**Figure 3A** is a top view of a converter and braking element according to a second exemplary embodiment;
**Figure 3B** is a cross-sectional view of the converter and braking element according to Figure 3A with respect to a view A-A as indicated in Figure 3A;
**Figure 4A** is a top view of a converter and braking element according to a third exemplary embodiment;
**Figure 4B** is a cross-sectional view of the converter and braking element according to Figure 4A with respect to a view A-A as indicated in Figure 4A;
**Figure 5A** is a cross-sectional view of a piston actuator according to a first exemplary embodiment of the present invention in a first piston actuator operating mode;
**Figure 5B** is a cross-sectional view of the piston actuator according to Figure 5A in a second piston actuator operating mode;
**Figure 6A** is a cross-sectional view of a piston actuator according to a second exemplary embodiment of the present invention in a first piston actuator operating mode;
**Figure 6B** is a cross-sectional view of the piston actuator according to Figure 6A in a second piston actuator operating mode;
**Figure 7A** is a cross-sectional view of a piston actuator according to a third exemplary embodiment of the present invention in a first piston actuator operating mode; and
**Figure 7B** is a cross-sectional view of the piston actuator according to Figure 7A in a second piston actuator operating mode.

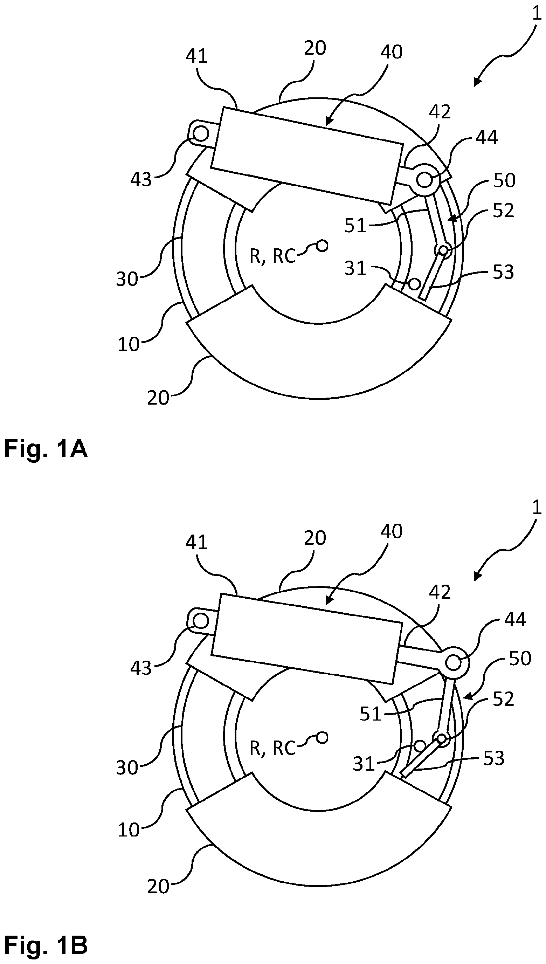

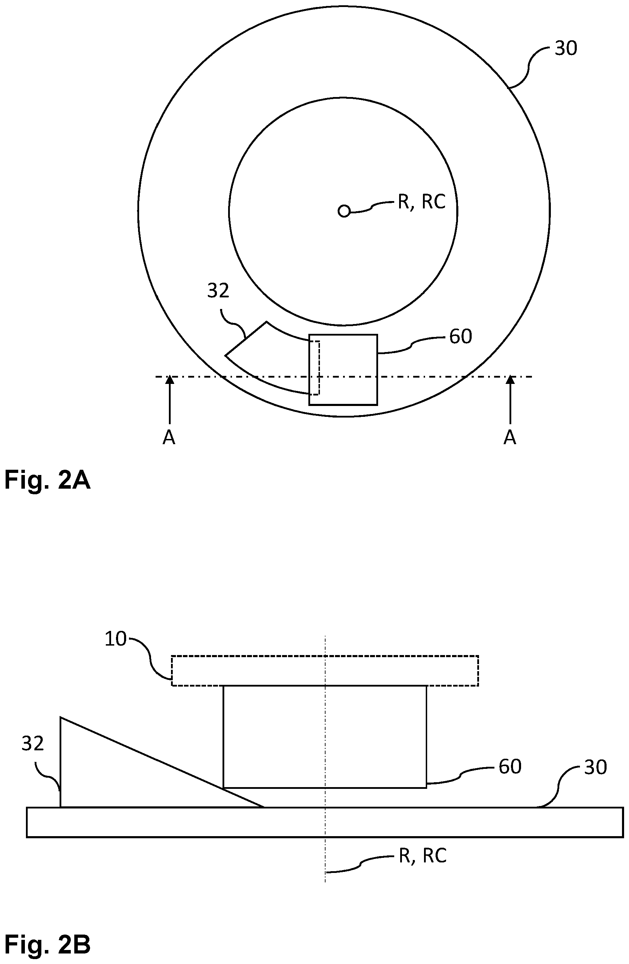

**Figure 1A** shows a lateral view of a brake assembly 1 according to an exemplary embodiment of the present invention in a first operating mode. The brake assembly 1 of the exemplary embodiment is a disc brake assembly comprising a brake disc 10 as brake element rotationally supported about a rotational axis R and two brake calipers 20, each of which comprises two brake pads 60 **(****Figures 2A, 2B****)** arranged on opposite sides of the brake disc to face opposite radial surfaces of the brake disc 10 extending in a radial direction with respect to the rotational axis R.

The brake assembly 1 further comprises a ring actuator 30 as converter rotatably supported about a converter rotational axis RC. In the exemplary embodiment, the converter rotational axis RC is coaxially aligned with the rotational axis R of the brake disc 10. The ring actuator 30 is of continuous annular shape. The radial surfaces of the ring actuator 30 with respect to the converter rotational axis RC extend annularly around the converter rotational axis RC. The radial surfaces of the ring actuator 30 are in parallel to the radial surfaces of the brake disc 10 with respect to the rotational axis R of the brake disc 10. However, in other embodiments, the radial surfaces of the ring actuator 30 may be inclined with respect to the radial surfaces of the brake disc 10 and/or the converter rotational axis RC may be offset and/or inclined with respect to the rotational axis R of the brake disc 10. One radial surface of the ring actuator 30 is facing one radial surface of the brake disc 10. The ring actuator 30 is arranged between the brake disc 10 and the brake calipers 20 with a respective brake pad 60 of each of the calipers associated with a respective radial surface being arranged between the converter 30 and the brake disc 10. The ring actuator 30 comprises a pin 31 as engaging member protruding from the radial surface of the ring actuator 30 opposite to the radial surface of the ring actuator 30 facing the brake disc 10.

To rotationally drive the ring actuator 30, the brake assembly 1 further comprises a lever mechanism 50 and a piston actuator 40 as translational driving device to drive the lever mechanism 50. The lever mechanism 50 comprises a driven lever 51 to be driven by the piston actuator 40 and a driving lever 53 to drive the ring actuator 30. The driven lever 51 and the driving lever 53 are connected to each other to provide a constant positional relationship. Here, the connection is a form fit connection but may also be a force-fit or firmly bonded connection in other embodiments. As a further alternative, the driven lever 51 and the driving lever 53 may be integrally formed. The driven lever 51 and the driving lever 53 are rotatably supported about a stationary lever pivot 52, here, with the driven lever 51 and the driving lever 53 extending therefrom in respective radial directions with respect to the rotational axis of the stationary lever pivot 52. One end of the driven lever 51 opposed to the stationary lever pivot 52 in the radial direction with respect to the stationary lever pivot 52 is rotatably connected to a second piston actuator pivot 44 as a driven lever translational driving device pivot. The second piston actuator pivot 44 is provided by an actuator piston 42 as translational driving member of the piston actuator 40. The actuator piston 42 is received within a piston actuator housing 41 and relatively movable with respect to the piston actuator housing 41 in a translational movement direction. The translational movement direction corresponds to the longitudinal extension of the actuator piston, respectively to its axial extension. Due to such relative translational movement the actuator piston 42 is extendable with respect to a stationary first piston actuator pivot 43 as stationary translational driving device pivot. In the exemplary embodiment, the piston actuator 40 is a pneumatic spring loaded piston actuator. However, in other embodiments, the piston actuator 40 may be hydraulically or electrically driven with or without being spring loaded.

In the operation mode shown in **Figure 1A****,** the actuator piston 42 is retracted with respect to the stationary first piston actuator pivot 43 being arranged on an opposite side of the piston actuator housing 41 in the translational movement direction with respect to the actuator piston 42. Accordingly, the driven lever 51 rotatably supported by the second piston actuator pivot 44 is in a position pulled towards the stationary first piston actuator pivot 43. Since the driving lever 53 is in a constant positional relationship with respect to the driven lever 51, the driving lever 53 is thereby in a position out of an operative engagement with the pin 31. Here, as shown in the drawing, there is a clearance between the driving lever 53 and the pin 31 in the given operating mode. According to another embodiment, the driving lever 53 and the pin 31 can also be in contact to reduce reaction time when the actuator piston is moved. In other words, a translational movement of the actuator piston 42 in a retracted position moves the driving lever 53 via the driven lever 51 away from the pin 31. As the driving lever does not operatively engage the pin 31 in the given operating mode, the ring actuator 30 is not rotated about the converter rotational axis RC. In such operating mode, the ring actuator does not act on the respectively assigned brake pads 60 to move such brake pads 60 towards the brake disc 10. Out of an operative engagement of the driving lever 53 with respect to the pin 31 relates to the driving lever 53 being distanced from the pin 31. In accordance with such distance, the driving lever 53 does not drive the pin 31 or the ring actuator 30, respectively, by a movement of the driving lever 53 until engaging the pin 31 to be driven. This also applies for a configuration, where the driving lever 53 may contact the pin 31 but without applying a respective movement of the pin 31. In other words, a first point of contact of the driving lever 53 and the pin 31 can be assumed as reference for the driving lever 53 starting to drive the pin 31 or the ring actuator 30, respectively, upon further movement of the driving lever 53. If the driving lever 53 is out of an operative engagement with the pin 31 but already in contact with the pin 31 when the actuator piston 42 is retracted, the hub of the actuator piston can be reduced as the actuator piston 42 has not to bridge an empty space before driving the pin 31. However, some distance between the driving lever 53 and the pin 31 before an operative engagement may be advantageous to avoid an unintended actuation, e.g. due to vibrations and/or tolerances, which may result in unintended slight braking effects.

**Figure 1B** shows a lateral view of the brake assembly according to **Figure 1A** in a second operating mode. The second operating mode corresponds to a brake mode with the brake pads 60 (not shown here, cf. Fig. 2) being moved towards the brake disc 10 to apply a braking force thereon. To apply a braking force on the brake disc 10, the actuator piston 42 is extended away from the stationary first piston actuator pivot 43 in the translational movement direction. The driven lever 51 is thereby rotated about the stationary lever pivot 52. Due to such rotation, the piston actuator 40 is rotated about the stationary first piston actuator pivot 43 to compensate for the displacement of the second piston actuator pivot 44 during rotation of the driven lever 51. As the driven lever 51 or the end thereof connected to the second piston actuator pivot 44, respectively, is moved away from the stationary first piston actuator pivot 43 by the translational movement of the actuator piston 42, the driving lever 53 is rotated about the stationary lever pivot 52 towards the pin 31. With engagement of the pin 31 and advanced rotation of the driving lever 53, the ring actuator 31 is rotationally driven about the converter rotation axis RC. Due to the rotational movement of the ring actuator 30, the ring actuator 30 moves the respective brake pads 60 assigned thereto towards the brake disc 10 to apply a braking force on the brake disc 10 in accordance with the rotational position of the ring actuator 30 and therefore the translational movement of the respective brake pads towards the brake disc 10. Accordingly, the braking force on the brake disc 10 is dependent on the rotational position of the ring actuator 30 with respect to the brake pads 60 or the brake disc, respectively. Exemplary embodiments of mechanisms to move the brake pads 60 towards the brake disc 10 may be the ring actuator 30 or a converter in general as will be described with respect to **Figures 2A to** 4B.

**Figure 2A** shows a top view of a converter, here the ring actuator 30, and a braking element, here a brake pad 60, according to a first exemplary embodiment. The schematic view describes principles of a converting mechanism. Accordingly, the representation does only show one brake pad 60 and one wedge member 32. However, with respect to the brake assembly 1 previously described, the ring actuator 30 may also comprise two wedge members 32 on the same radial surface of the ring actuator 30 opposed to each other with respect to the converter rotational axis RC, each of which capable of acting on a respective brake pad 60 on the same side of the bake disc 10 in accordance with the previously described brake assembly 1. The ring actuator 30 comprises the wedge member 32 as control slide extending from a radial surface of the ring actuator 30 facing the brake pad 60.

The wedge member 32 forms a ring segment on the ring actuator 30 in a circumferential direction of the ring actuator 30. The inclination of the wedge surface facing in the direction of the brake pad provides a lower height in the rotational direction of the ring actuator 30 rotating about the converter rotational axis RC to arrive at the brake pad 60 first before the height towards the brake pad 60 increases. Consequently, the brake pad 60 is translationally moved away from the ring actuator 30 when the wedge member 32 comes in contact with the brake pad 60 and is further rotated for an advancing movement of the inclined surface of the wedge member 32 with increasing height with respect to a first point of contact. In general, a rotational movement of the ring actuator 30 is converted into a translational movement of the brake pad 60 towards the brake disc 10 by the control slide. As such movement of the brake pad 60 in the given embodiment is restricted to the rotational angles the wedge member 32 is effective on the brake pad 60, the driving mechanism for driving the ring actuator 30 may only require the ability for a rotational movement of the ring actuator 30 over such range. In general and therefore also applicable to any other embodiments, the driving mechanism for the ring actuator 30 may be configured for a bidirectional movement to allow the ring actuator 30 to apply and release a braking force on the brake disc 10 via the brake pads 60. Alternatively or in addition, the driving mechanism may allow at least a 360° rotation of the ring actuator 30. The brake assembly 1 may also provide a retracting mechanism for the ring actuator 30 separate from the driving mechanism of the ring actuator 30.

**Figure 2B** shows a cross-sectional view of the ring actuator 30 as converter and the brake pad 60 as braking element according to **Figure 2A** with respect to a view A-A as indicated in **Figure 2A****.** Further, **Figure 2B** also shows a section of the brake disc 10 illustrating the functional principle of the ring actuator 30 comprising the wedge member 32 as described above. The cross-section view corresponds to a rotational position of the ring actuator 30, in which the inclined wedge surface with respect to the radial surface of the ring actuator 30 facing the brake pad 60 has been moved between the radial surface of the ring actuator 30 and the brake pad 60 due to the rotational movement of the ring actuator 30. Accordingly, the brake pad 60 has been moved towards the brake disc 10 opposed to the ring actuator 30 with the brake pad 60 therebetween to come in contact with the brake disc 10. With an advanced rotation of the ring actuator 30 and thereby the wedge member 32 the increasing height of the wedge member 32 extending in a direction towards the surface of the brake pad 60 to be actuated, i.e. the surface of the brake pad 60 facing the radial surface of the ring actuator 30, results in an advanced movement of the brake pad 60 towards the brake disc 10. As the brake disc 10 and the ring actuator 30 are stationary in an axial direction with respect to the their respective rotational axes R, RC, the brake pad 60 applies an increasing braking force on the brake disc 10 with such advanced movement.

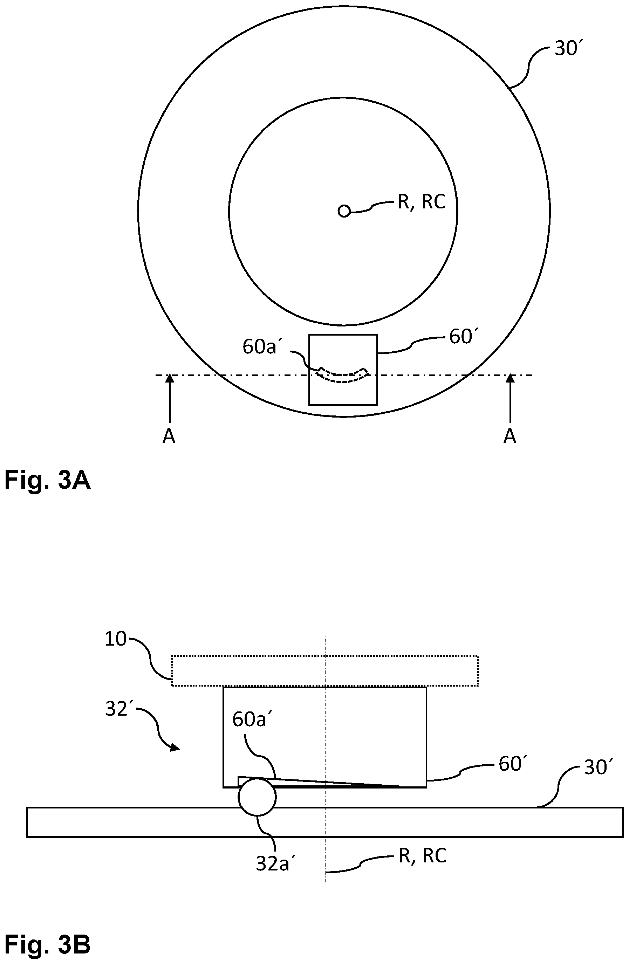

**Figure 3A** shows a top view of a ring actuator 30' as converter and a brake pad 60' as braking element according to a second exemplary embodiment. As above, only one brake pad 60' is represented to describe the basic principles. The brake pad 60' of the second embodiment differs from the brake pad 60 of the first embodiment in that the brake pad 60' comprises a ball track 60a'. The ball track 60a' extends as ring section in a circumferential direction of the of the ring actuator 30' with the converter rotational axis RC as point of origin for the radius of the curvature of such ring section.

**Figure 3B** shows a cross-sectional view of the ring actuator 30' as converter and the brake pad 60' as braking element according to **Figure 3A** with respect to a view A-A as indicated in **Figure 3A**. As illustrated, the ring actuator 30' of the second embodiment differs from the ring actuator 30 of the first embodiment in that the ring actuator 30' comprises a ball ramp mechanism 32' as control slide interacting with the brake pad 60'. A ball 32' is therefore rotatably supported on the radial surface of the ring actuator 30' facing the brake pad 60'. The ball 32' is configured to be guided in the ball track 60a'. As apparent from the cross-sectional view, the ball track 60a' provides a depth in an axial direction with respect to the converter rotational axis RC, which decreases from one end of the ball track 60a' to another in the circumferential direction. The position of the ball 32a' along the ball track 60a' corresponds to a rotational position of the ring actuator 30'. Dependent on the position of the ball 32a' along the ball track 60a' a distance between the radial surface of the ring actuator 30' facing the brake pad 60' and the brake pad 60' differs in accordance with the respective depth of the ball track 60a'. The exemplary embodiment shows the ball 32a' in a position to be received by the maximum depth of the ball track 60a', in which the brake pad 60' is near to but not in contact with the brake disc 10. With a rotational movement of the ring actuator 30' to guide the ball 32a' in a direction from the position with the maximum depth of the ball track 60a' to a position with a minimum depth of the ball track 60a', the distance between the ring actuator 30' and the brake pad 60' in the axial direction of the converter rotational axis increases. Upon such rotation of the ring actuator 30' the brake pad 60' comes in contact with the brake disc 10. As the brake disc 10 and the ring actuator 30' are stationary in an axial direction with respect to their respective rotational axes R, RC, the brake pad 60' applies an increasing braking force on the brake disc 10 with an advanced movement after contacting the brake disc 10.

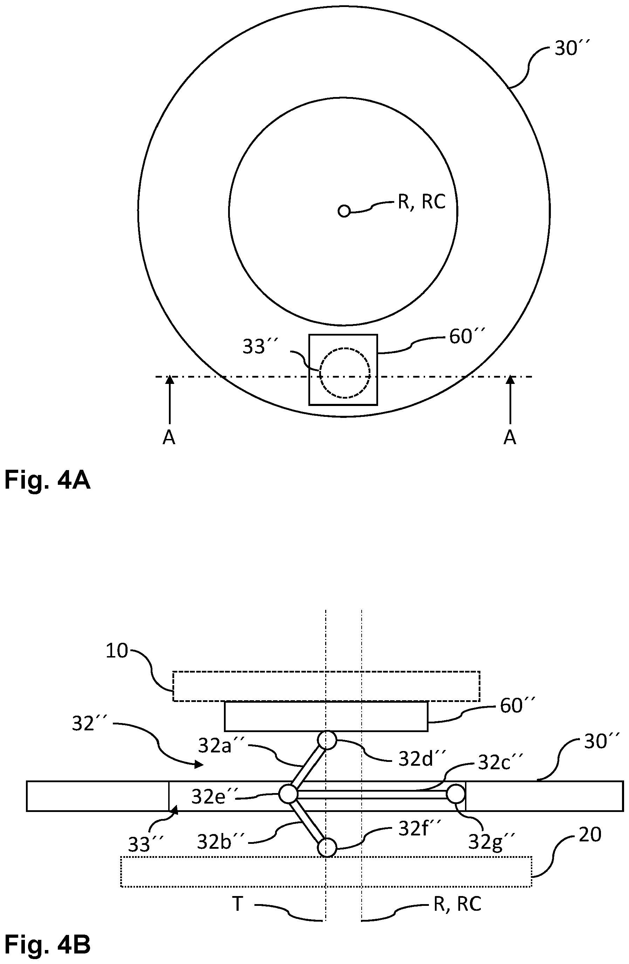

**Figure 4A** shows a top view of a ring actuator 30" as converter and a braking pad 60" as braking element according to a third exemplary embodiment. The third embodiment differs from the first and second embodiment by the ring actuator 30" comprising a toggle lever mechanism 32" **(****Figure 4B****)** to actuate the brake pad 60" instead of a control slide, like the wedge member 32 or the ball ramp mechanism 32'. To accommodate and actuate the toggle lever mechanism 32" the ring actuator 30" comprises a toggle lever mechanism opening 33".

**Figure 4B** shows a cross-sectional view of the ring actuator 30" as converter and the brake pad 60" as braking element according to **Figure 4A** with respect to a view A-A as indicated in **Figure 4A****.** The toggle lever mechanism 32" is supported between the brake pad 60" and a portion of the caliper 20 facing the brake pad 60" in an actuating direction by the toggle lever mechanism 32". The toggle lever mechanism 32" comprises a first toggle lever 32a" with one end thereof being attached to the brake pad 60" by a first toggle lever pivot 32d" as an exemplary first hinge. The other end of the first toggle lever 32a" is connected to one end of a second toggle lever 32b" via a second toggle lever pivot 32e" as an exemplary second hinge. In turn, the other end of the second toggle lever 32b" is attached to the portion of the caliper 20 as counter bearing for the toggle lever mechanism 32" by a third toggle lever pivot 32f" as an exemplary third hinge. The actuating direction of the toggle lever is represented by the toggle lever axis T extending through the first and third toggle lever pivot 32d", 32f". The brake pad 60" is movable towards the brake disc 10 by spreading the first and second toggle levers 32a", 32b" apart from each other and thereby increasing the actuating length of the toggle lever mechanism 32" in direction of the toggle lever axis T. As the brake disc 10 and the portion of the caliper 20 facing the brake pad 60" are stationary in an axial direction with respect to the rotational axis R, the brake pad 60" applies an increasing braking force on the brake disc 10 with an advanced spreading of the toggle lever mechanism 32".

The ring actuator 30" is arranged between the brake pad 60" and the portion of the caliper 20" facing the brake pad 60". To actuate the toggle lever mechanism 32", the ring actuator 30" comprises the toggle lever mechanism opening 33" with the toggle lever mechanism 32" passing therethrough in the direction of the toggle lever axis T. The ring actuator 30" is connected to the toggle lever mechanism 32" via a toggle lever actuator 32c". One end of the toggle lever actuator 32c" is hinged to the second toggle lever pivot 32e" and the other end of the toggle lever actuator 32c" is hinged to a toggle lever actuator pivot 32g" attached to the ring actuator 30", here, to the inner surface of the ring actuator 30" forming the toggle lever mechanism opening 33" by circumferentially extending there around. The converter rotational axis RC of the ring actuator 30" is in parallel to but offset from the toggle lever axis T to allow the first and second toggle levers 32a" and 32b" to be spread apart or contracted by the toggle lever actuator 32c" upon a respective rotational movement of the ring actuator 30".

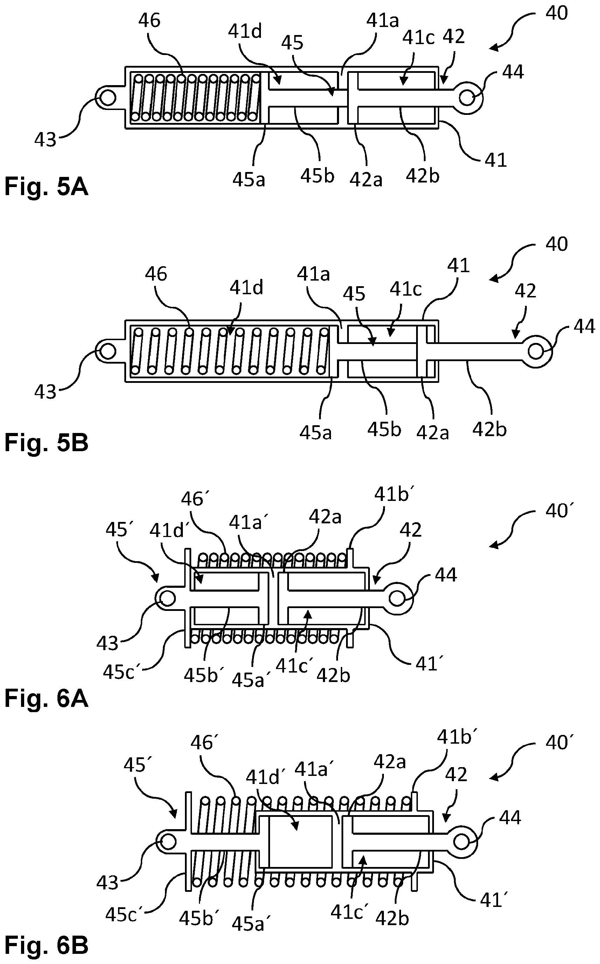

**Figure 5A** shows a cross-sectional view of the piston actuator 40 according to a first exemplary embodiment of a piston actuator of the present invention in a first piston actuator operating mode. The piston actuator 40 comprises the position actuator housing 41 with an interior volume, which is separated by a partition wall 41a into an actuator piston receiving portion 41c at least partially accommodating an actuator piston 42 and a actuator position driving piston receiving portion 41d to accommodate an actuator piston driving piston 45. Further, the piston actuator housing 40 comprises the first piston actuator pivot 43 to be stationary attached to a carrier member, such as one of the calipers 20 of the brake assembly 1 according to **Figures 1A and 1B****.** The actuator piston 42 is relatively movable with respect to the piston actuator housing 41 in the translational movement direction towards and away from the partition wall 41a. The actuator piston 42 comprises an actuator position area 42a extending circumferentially in a radial direction with respect to the piston axis to be actuated for a movement in the translational movement direction and an actuator piston stem 42b extending from a surface of the actuator piston area 42a facing away from the partition wall 41a in the translational movement direction. The actuator piston stem 42b passes through an end of the piston actuator housing 41 opposed to the partition wall 41a to extend beyond the piston actuator housing 41. The second piston actuator pivot 44 is provided by the end portion of the actuator piston stem extending beyond the piston actuator housing 41.

With the actuator piston area 42a extending radially from both sides of the actuator piston stem 42b with respect to the translational movement direction, the actuator piston area 42a does not only serve to be driven for a translational movement in the translational movement direction but also serves as an actuator piston stop with respect to the opening in piston actuator housing 41 for passing the actuator piston stem 42b therethrough. Accordingly, the translational movement of the actuator piston 42 in the translational movement direction away from the partition wall 41a is restricted by the actuator piston area striking against the portion of the piston actuator housing 41 with the opening for the actuator piston stem 42b opposed to the partition wall 41a. Furthermore, the radial extension of the actuator piston area 42a with respect to the translational movement direction is configured to comply with an inner contour of the interior volume of the actuator piston receiving portion 41c in such direction to allow the actuator piston 42 to be guided along the inner contour (here for e.g. like a piston guided in a cylinder, but it is not limited to such a round piston/cylinder shape) during a respective translational movement.

The actuator piston driving piston 45 is also relatively movable with respect to the piston actuator housing 41 in parallel to the translational movement direction towards and away from the partition wall 41a. The actuator piston driving piston 45 comprises an actuator piston driving piston area 45a and an actuator piston driving piston stem 45b extending from a surface of the actuator piston driving piston area 45a facing the partition wall 41a in the translational movement direction. The actuator piston driving piston stem 45b passes through an opening of the partition wall 41a to contact the actuator piston area 42a and to move the actuator piston 42 in the translational movement direction in accordance with a respective translational movement of the actuator piston driving piston 45. For a bidirectional movement of the actuator piston 42, the actuator piston receiving portion 41c between the actuator piston area 42a is in sealed engagement with an inner contour of the actuator piston receiving portion 41c, along which the actuator piston 42 is axially movable, and a portion of the piston actuator housing 41 opposed to the partition wall 41a can be pressurized.

In other alternative embodiments, where the actuator piston 42 and the actuator piston driving piston 45 may not be connected so that the actuator piston driving piston 45 may only push the actuator piston 42 in the translational movement direction away from the partition wall 41a, as previously described, a reverse movement ability of the actuator piston 42 may also be implemented or supported by a spring mechanism or the like acting in such reverse direction.

The actuator piston driving piston area 45a provides a radial extension with respect to the translational movement direction in order to comply with an inner contour of the interior volume of the actuator piston driving piston receiving portion 41d in such direction to allow the actuator piston 45 to be guided along the inner contour during a respective translational movement. Further, the radial extension is configured to allow the actuator piston driving piston area 45a to provide a sealing effect with the inner contour to allow a volume between the partition wall 41a and the actuator piston driving piston area 45a to be pressurized without affecting a volume on a side of the actuator piston driving piston area 45a facing away from the partition wall 41a.

The piston actuator housing 41 further comprises a spring member 46, here a compression spring, arranged between the actuator piston driving piston area 45a on a side facing away from the partition wall 41a and an inner surface of the piston actuator housing 41 opposed to such side of the actuator piston driving piston area 45a. Accordingly, the piston actuator 40 of the present embodiment provides a serial arrangement in the translational movement direction starting with the first piston actuator pivot 43, followed by the spring member 46, the actuator piston driving piston 45 and the actuator piston 42. In alternative embodiments, the first piston actuator pivot 43 may be arranged somewhere else on the piston actuator housing 41 as long as a respective position of the first piston actuator pivot 43 allows the piston actuator 40 to be rotated for a sufficient swerve movement in the event of a displacement acting on the piston actuator 40. In some embodiments, the first piston actuator pivot 43 may also be omitted.

In the first piston actuator operating mode the interior volume of the actuator piston driving piston receiving portion 41d between the partition wall 41a and the actuator piston driving piston area 45a is pressurized. The resulting force of the pressurization acts against the spring force of the spring member 46 and translationally moves the actuator piston driving piston 45 in the translational moving direction away from the partition wall 41a by the resulting force being higher than the counterforce by the spring member 46. As the actuator piston driving piston 45 passes through the partition wall 41a and is connected to the actuator piston 42, the actuator piston 42 is simultaneously moved with the actuator piston driving piston 45 in a direction towards the partition wall 41a to be retracted or to provide a retracted position, respectively. The first piston actuator operating mode is applicable to the first operating mode of the brake assembly 1 as per **Figure 1A****.**

**Figure 5B** shows a cross-sectional view of the piston actuator 40 according to **Figure 5A** in a second piston actuator operating mode. In the second piston actuator operating mode, the pressure in the interior volume of the actuator piston driving piston receiving portion 41d between the partition wall 41a and the actuator piston driving piston area 45a has been released or at least reduced so that the resulting force falls below the spring force of the spring member 46. Consequently, the spring member 46 pushes the actuator piston driving piston 45 in the translational movement direction towards the partition wall 41a until the movement is stopped by the actuator piston driving piston area 45a strikes the partition wall 41a. The movement of the actuator piston driving piston 45 causes the actuator piston 42 to be moved simultaneously in the translational movement direction away from the partition wall 41a. Thereby the actuator piston 42 is extended with respect to the piston actuator housing 41. The second piston actuator operating mode is applicable to the second operating mode of the brake assembly 1 as per **Figure 1B****.**

**Figure 6A** shows a cross-sectional view of a piston actuator 40' according to a second embodiment of a piston actuator of the present invention in a first piston actuator operating mode. The actuator piston 42 is received in an actuator piston receiving portion 41c' of a piston actuator housing 41' as in the first exemplary embodiment but not to be contacted by the actuator piston driving piston 45' to be moved relatively to the piston actuator housing 41'. For such relative movement, the actuator piston 42 may be relatively movable within the actuator piston receiving portion 41c' in the translational movement direction, for example, by a pressurization with or without counteraction of a spring member comparable to the respective principle as described for the actuator piston driving piston 45 of the first embodiment. The piston actuator housing 41 further comprises an actuator piston driving piston receiving portion 41d'. The actuator piston driving piston receiving portion 41d' and the actuator piston receiving portion 41 c' are provided by an interior volume of the piston actuator housing 41' extending in the translational movement direction by separating the interior volume by a continuous partition wall 41a'. The actuator piston driving piston 45' of the second embodiment is comparable to the actuator piston driving piston 45 of the first embodiment with respect to the actuator piston driving piston area 45a' and an actuator piston driving piston stem 45b' extending therefrom but the actuator piston driving piston stem 45b' further extends through the housing 41a' at an end thereof opposed to the partition wall 41a'. Further, the actuator piston driving piston 45' comprises an actuator piston driving piston stop 45c' extending circumferentially in a radial direction with respect to the translational movement direction beyond the piston actuator housing 41'. The actuator piston driving piston 45' also comprises the stationary first piston actuator pivot 43 protruding in the translational movement direction from a side of the actuator piston driving piston stop 45c' facing away from the piston actuator housing 41'. The piston actuator housing 41' comprises a piston actuator housing stop 41b' extending circumferentially in a radial direction with respect to the translational movement direction and protruding from an outer surface of the piston actuator housing 41', which extends in the translational movement direction. The piston actuator housing stop 41b' and the actuator piston driving piston stop 45c' are facing each other with a spring member 46', here also a compression spring, being arranged between the piston actuator housing stop 41b' and the actuator piston driving piston stop 45c'.

In the first piston actuator operating mode the interior volume of the actuator piston driving piston receiving portion 41d' between the actuator piston driving piston area 45a' facing away from the partition wall 41a' and the end of the piston actuator housing 41a' opposed to the partition wall 41a' is pressurized. The resulting force of the pressurization acts against the spring force of the spring member 46' and provides a relative movement of the actuator piston driving piston 45' towards the partition wall 41a' in the translational movement direction by the resulting force being higher than the counterforce by the spring member 46'. In other words, the actuator piston driving piston 45' is retracted in the actuator piston driving piston receiving portion 41d'. The respective movement is restricted by the actuator piston driving piston area 45a' reaching the partition wall 41a' and/or the actuator piston driving piston stop 45c' reaching the piston actuator housing 41'. In other embodiments, the respective movement may be restricted by the actuator piston driving piston area 45a' reaching the partition wall 41a' or the actuator piston driving piston stop 45c' reaching the piston actuator housing 41'. The first piston actuator operating mode is applicable to the first operating mode of the brake assembly 1 as per **Figure 1A****.**

**Figure 6B** shows a cross-sectional view of the piston actuator according to **Figure 6A** in a second piston actuator operating mode.

In the second piston actuator operating mode, the pressure in the interior volume of the actuator piston driving piston receiving portion 41d' between the actuator piston driving piston area 45a' facing away from the partition wall 41a' and the end of the piston actuator housing 41a' opposed to the partition wall 41a' has been released or at least reduced so that the resulting force falls below the spring force of the spring member 46'. Consequently, the spring member 46' pushes the piston actuator housing 41' in the translational movement direction away from the actuator piston driving piston stop 45c'. The translational movement is stopped by the actuator piston driving piston area 45a' reaching the end of the piston actuator housing 41' opposed to the partition wall 41a'.

The movement of the piston actuator housing 41' in the translational movement direction away from the actuator piston driving piston stop 45c' causes the actuator piston 42 to be moved simultaneously in the translational movement direction away from the actuator piston driving piston 45'. Thereby the actuator piston 42 is extended with respect to the stationary first piston actuator pivot 43. The second piston actuator operating mode is applicable to the second operating mode of the brake assembly 1 as per **Figure 1B****.**

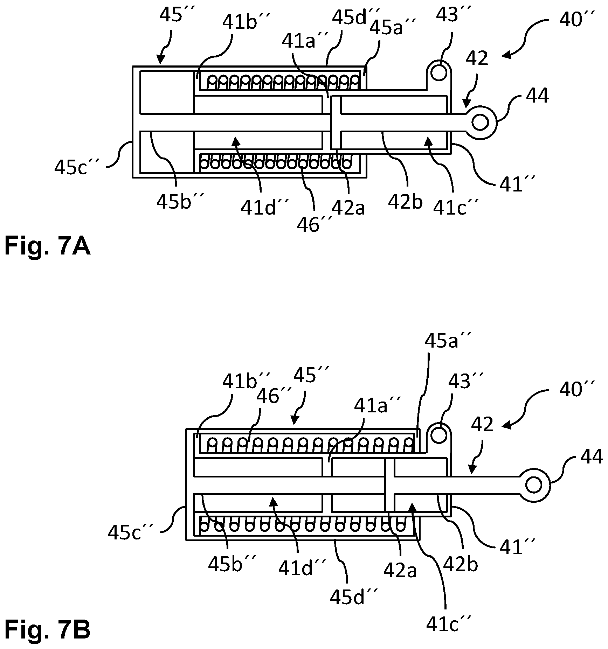

**Figure 7A** shows is a cross-sectional view of a piston actuator 40" according to a third embodiment of a piston actuator of the present invention in a first piston actuator operating mode.

Similar to the first embodiment, the piston actuator 40" comprises the position actuator housing 41 " with an interior volume, which is separated by a partition wall 41a" into an actuator piston receiving portion 41c" at least partially accommodating the actuator piston 42 comparable to the piston actuator 40 as per the first embodiment and a actuator position driving piston receiving portion 41d" to accommodate the actuator piston driving piston 45". The actuator piston 42 is relatively movable with respect to the piston actuator housing 41 " in the translational movement direction towards and away from the partition wall 41a".

The actuator piston driving piston 45" is also relatively movable with respect to the piston actuator housing 41 " in a translational movement direction towards and away from the partition wall 41a". The actuator piston driving piston 45" comprises an actuator piston driving piston stem 45b" extending in the translational movement direction. The actuator piston driving piston stem 45b" passes through an opening of the partition wall 41a" and is configured to contact the actuator piston area 42a to move the actuator piston 42 in the translational movement direction in accordance with a respective translational movement of the actuator piston driving piston 45". The actuator piston driving piston stem 45b" extends from an actuator piston driving piston stop 45c", which extends circumferentially in a radial direction with respect to the translational movement direction. A hollow cylindrical body 45d" extends from the outer circumference of the actuator piston driving piston stop 45c" in the translational movement direction towards the actuator piston 42. An actuator piston driving piston area 45a" extends circumferentially from the hollow cylindrical body 45d" in a radial direction with respect to the translational movement direction to enclose an outer surface of the piston actuator housing 41 " extending in the translational movement direction. In turn, the piston actuator housing 41" comprises a piston actuator housing stop 41b" projecting circumferentially in a radial direction with respect to the translational movement direction away from the actuator piston driving piston stem 45b".The piston actuator housing stop 41b" is positioned at an end of the actuator piston driving piston receiving portion 41d" facing away from the partition wall 41a". The piston actuator housing stop 41b" extends in the radial direction to an inner surface of the hollow cylindrical body 45d". Accordingly, a relative movement between the piston actuator housing 41 " and the actuator piston driving piston 45" is performed by guiding the piston actuator housing 41 " within the actuator piston driving piston 45" via the piston actuator housing stop 41b" sliding along the inner surface of the hollow cylindrical body 45d" and the outer surface of the piston actuator housing 41 " extending in the translational movement direction being further guided by the actuator piston driving piston area 45a". A spring member 46", here also a compression spring, is arranged between the actuator piston driving piston area 45a" and the piston actuator housing stop 41b" to provide a spring force in the translational movement direction. In a radial direction with respect to the translational movement direction, the spring member 46" is arranged between the hollow cylindrical body 45d" and the outer surface of the piston actuator housing 41 " extending in the translational movement direction. In other words, the spring member 46" extends around the outer surface of the piston actuator housing 41 " extending in the translational movement direction and being enclosed by the hollow cylindrical body 45d". A first piston actuator pivot 43" to be stationary attached to a carrier member, such as one of the calipers 20 of the brake assembly 1, is provided on the outer surface of the piston actuator housing 41 " extending in the translational movement direction between the actuator piston driving piston area 45a" and an end of the piston actuator housing 41" extending beyond the actuator piston driving piston area 45a".

In the first piston actuator operating mode the interior volume of the actuator piston driving piston receiving portion 41d" between the partition wall 41a" and the actuator piston driving piston stop 45c" is pressurized. The resulting force of the pressurization acts against the spring force of the spring member 46" and translationally moves the actuator piston driving piston 45" in the translational driving direction away from the partition wall 41a" by the resulting force being higher than the counterforce by the spring member 46". To move the actuator piston 42 in the translational movement direction towards the partition wall 41a", the interior volume of the actuator piston receiving portion 41c" between the actuator piston area 42a and the portion of the piston actuator housing 41" opposed to the partition wall 41a" in the translational movement direction is pressurized. In alternative embodiments, the actuator piston driving piston 45" passing through the partition wall 41a" may be connected to the actuator piston 42 to simultaneously move the actuator piston 42 with the actuator piston driving piston 45" in a direction towards the partition wall 41a" to be retracted or to provide a retracted position, respectively. The first piston actuator operating mode is applicable to the first operating mode of the brake assembly 1 as per **Figure 1A****.**

**Figure 7B** shows a cross-sectional view of the piston actuator 40" according to **Figure 7A** in a second piston actuator operating mode. In the second piston actuator operating mode, the pressure in the interior volume of the actuator piston driving piston receiving portion 41d" between the partition wall 41a" and the actuator piston driving piston stop 45c" has been released or at least reduced so that the resulting force falls below the spring force of the spring member 46". Consequently, the spring member 46" pushes the actuator piston driving piston 45" in the translational movement direction towards the partition wall 41a" by pushing the actuator piston driving piston area 45a" in the translational movement direction away from the piston actuator housing stop 41b". A respective relative movement is restricted by the actuator piston driving piston stop 45c" reaching the piston actuator housing stop 41b". The movement of the actuator piston driving piston 45" causes the actuator piston 42 to be moved simultaneously in the translational movement direction away from the partition wall 41a". Thereby the actuator piston 42 is extended with respect to the piston actuator housing 41 ". The second piston actuator operating mode is applicable to the second operating mode of the brake assembly 1 as per **Figure 1B****.**

With respect to **Figures 5B, 6B** **and** **7B****,** the second piston actuator operating mode may correspond to parking brake operation of the brake assembly 1. The respective actuator piston driving piston 45, 45',45" as spring-loaded actuator piston driving piston provides a passive braking concept, i.e. is configured to extend the actuator piston 42 in the translational moving direction to subsequently move the at least one braking pad 60, 60', 60" towards the brake disc 10, when a counterforce on the respective spring member 46, 46', 46" is lower than the spring force. In other words, the passive braking concept substantially applies in a mode in which the spring member 46, 46', 46" is allowed to extend, which specifically corresponds to a de-energized operation of the respective actuator piston driving piston 45, 45',45".

In turn, the first piston actuator operating mode may correspond to a service braking mode, in which a respective pressurization to provide a counteracting force on the respective spring member 46, 46', 46" in the translational movement direction, as previously described for the respective embodiments as per **Figures 5A, 6A** **and** **7A****,** allows the actuator piston 42 to be moved in a retracted position to release the at least one brake pad 60, 60', 60" from applying a braking force to the brake disc 10. However, for a concrete service braking action, the interior volume of the respective actuator piston receiving portion 41c, 41c', 41c" between the actuator piston 42 and the respective partition wall 41a, 41a', 41a" may be pressurized to move the actuator piston 42 in the translational movement direction away from the respective partition wall 41a, 41a', 41a" to extend. In embodiments with the actuator piston driving piston, like actuator piston driving piston 45, 45" as per Figures 5A, 5B, 7A and 7B, the length of the respective actuator piston driving piston stem 45b, 45b" in the translational movement direction is configured to be at least partially still positioned within the respective through opening of the respective partition wall 41a, 41a" to seal the respective actuator piston receiving portion 41c, 41c" from the respective actuator piston driving piston receiving portion41d, 41d". Thereby the interior volume of the respective actuator piston receiving portion 41c, 41c" between the actuator piston 42 and the respective partition wall 41a, 41a" may be pressurized without affecting the actuator piston driving piston 45, 45".

The invention has been described with respect to an exemplary embodiments. However, the invention is not limited to the exemplary embodiments.

### LIST OF REFERENCE SIGNS

- 1: brake assembly
- 10: brake disc (brake element)
- 20: brake caliper
- 30, 30', 30": ring actuator (converter)
- 31: pin (engaging member)
- 32: wedge member (control slide)
- 32': ball ramp mechanism (control slide)
- 32a': ball
- 32": toggle lever mechanism
- 32a": first toggle lever
- 32b": second toggle lever
- 32c": toggle lever actuator
- 32d": first toggle lever pivot
- 32e": second toggle lever pivot
- 32f": third toggle lever pivot
- 32g": toggle lever actuator pivot
- 33": toggle lever mechanism opening
- 40, 40', 40": piston actuator (translational driving device)
- 41, 41', 41 ": piston actuator housing
- 41a, 41a', 41a": partition wall
- 41b', 41b": piston actuator housing stop
- 41c, 41c', 41c": actuator piston receiving portion
- 41d, 41d', 41d": actuator piston driving piston receiving portion
- 42: actuator piston (translational driving member)
- 42a: actuator piston area
- 42b: actuator piston stem
- 43, 43": stationary first piston actuator pivot (stationary translational driving device pivot)
- 44: second piston actuator pivot (driven lever translational driving device pivot)
- 45, 45', 45": actuator piston driving piston
- 45a, 45a', 45a": actuator piston driving piston area
- 45b, 45b', 45b": actuator piston driving piston stem
- 45c', 45c": actuator piston driving piston stop
- 45d": hollow cylindrical body
- 46, 46', 46": spring member
- 50: lever mechanism
- 51: driven lever
- 52: stationary lever pivot
- 53: driving lever
- 60, 60', 60": brake pad (braking element)
- 60a': ball track (ball ramp mechanism)
- R: rotational axis (brake element)
- RC: converter rotational axis
- T: toggle lever axis

## Claims

1. Brake assembly (1), comprising:
a brake element (10) rotatably supported about a rotational axis (R),
at least one braking element (60, 60', 60") configured to be movable towards a surface of the brake element (10) for applying a braking force on the brake element (10), and
a converter (30, 30', 30") rotatably supported about a converter rotational axis (RC) and configured to move the at least one braking element (60, 60', 60") towards the surface of the brake element (10) in accordance with a rotational angle of the converter (30, 30', 30") with respect to the converter rotational axis (RC).

2. The brake assembly (1) according to claim 1, wherein the converter (30, 30', 30") is configured to transfer its rotational movement into a translational movement of the at least one braking element (60, 60', 60").

3. The brake assembly (1) according to claim 1 or 2, wherein the brake assembly (1) comprises a lever mechanism (50) rotatably supported about a stationary lever pivot (52), comprising at least one driving lever (53) configured to engage at least one engaging member (31) of the converter (30, 30', 30") to transfer a rotational movement of the driving lever (53) in a rotational movement of the converter (30, 30', 30"), preferably with the driving lever (53) configured to provide a changing, in particular an increasing or decreasing, preferably a progressively or linearly increasing or decreasing, transmission ratio between a driving lever input force and a driving lever output force.

4. The brake assembly (1) according to claim 3, wherein the engaging member (31) or the driving lever (53) comprises a projection or a recess, preferably a pin, and/or a rolling member for engaging with the driving lever (53) or the engaging member (31).

5. The brake assembly (1) according to claim 3 or 4, wherein the lever mechanism (50) further comprises a driven lever (51), preferably rotatably supported about the stationary lever pivot (52) with the driving lever (53) attached to the driven lever (51) in a fixed position relationship to be driven by the driven lever (51) about the stationary lever pivot (52) or rotatably supported about a driven lever rotational axis in operative engagement with the driving lever (53), in particular with the driven lever (51) configured to provide a changing, in particular an increasing or decreasing, preferably a progressively or linearly increasing or decreasing, transmission ratio between the driven lever input force and the driven lever output force, wherein the driven lever (51) is preferably driven by a translational driving device (40, 40', 40").

6. The brake assembly (1) according to claim 5, wherein the translational driving device (40, 40', 40") comprises a translational driving member (42) and one end of the driven lever (51) opposed to the stationary lever pivot (52) is rotatably attached thereto by a driven lever driving device pivot (44), and wherein the translational driving device (40, 40', 40") is further rotatably supported by a stationary translational driving device pivot (43, 43") to be rotatably supported about the stationary translational driving device pivot (43, 43").

7. The brake assembly (1) according to claim 5 or 6, wherein the translational driving device (40, 40', 40") is a piston actuator (40, 40', 40"), preferably a pneumatic and/or spring loaded piston actuator (40, 40', 40") or an electro-mechanic linear actuator.

8. The brake assembly (1) according to any one of the preceding claims, wherein the converter (30, 30', 30") comprises a control slide (32, 32'), preferably a wedge member (32) and/or a ball ramp mechanism (32'), and/or a toggle lever mechanism (32") to transfer its rotational movement into the movement of the at least one braking element (60, 60', 60"), and is preferably configured to transfer its rotational movement into the movement of the at least one braking element (60, 60', 60") for a force increase or decrease, preferably a progressive or linear force increase or decrease, from the at least one braking element (60, 60', 60") on the brake element (10) in accordance with a rotational angle of the converter (30, 30', 30") with respect to the converter rotational axis (RC).

9. The brake assembly (1) according to any one of the preceding claims, wherein the converter (30) is a ring actuator (30, 30', 30") with the at least one braking element (60, 60', 60") being arranged between an annular surface of the ring actuator (30, 30', 30") and the brake element (10).

10. The brake assembly (1) according to any one of the preceding claims, wherein the brake element (10) comprises a brake disc (10) and the brake assembly (1) comprises at least one brake caliper (20) to support at least two braking elements (60, 60', 60") with at least one of the at least two braking elements (60, 60', 60") being arranged on one side of the brake disc (10) and at least another one of the at least two braking elements (60, 60', 60") being arranged on the opposed side of the brake disc (10), wherein the brake assembly (1) is configured to move the at least two braking elements (60, 60', 60") simultaneously towards the respective surface of the brake disc (10) due to the configuration of the caliper, by one converter (30, 30', 30") transferring its rotational movement into the translational movement of the at least two braking elements (60, 60', 60") or by at least two converters (30, 30', 30"), each of which being driven by the same or a separate, preferably an independent lever mechanism (50), transferring their rotational movement into the translational movement of a respective one of the at least two braking elements (60, 60', 60") assigned thereto.

11. The brake assembly (1) according to any one of the preceding claims, wherein the brake element (10) comprises a brake disc (10) and the brake assembly (1) comprises at least two braking elements (60, 60', 60") being arranged on the same side of the brake disc (10), wherein the brake assembly (1) is configured to move the at least two braking elements (60, 60', 60") simultaneously towards the surface of the brake disc (10) by one converter (30, 30', 30") transferring its rotational movement into the translational movement of the at least two braking elements (60, 60', 60") or by at least two converters (30, 30', 30"), each of which being driven by the same or a separate, preferably an independent, lever mechanism (50), transferring their rotational movement into the translational movement of a respective one of the at least two braking elements (60, 60', 60") assigned thereto.

12. Piston actuator (40, 40', 40") for a brake assembly (1) according to any one of the claims 6 to 11, wherein the piston actuator (40, 40', 40") comprises an actuator piston (42) as the translational driving member (42).

13. The piston actuator (40, 40', 40") according to claim 12, wherein the piston actuator (40, 40', 40") comprises a piston actuator housing (41, 41', 41 ") with an interior volume extending in a translational movement direction of the actuator piston (42) with respect to a first piston actuator pivot (43, 43") as the stationary translational driving device pivot (43, 43"), wherein the interior volume is separated in the translational movement direction by a partition wall (41a, 41a', 41a") in an actuator piston receiving portion (41c, 41c', 41c") for at least partially accommodating the actuator piston (42) and in an actuator piston driving piston receiving portion (41d, 41d', 41d") for at least partially accommodating an actuator piston driving piston (45, 45', 45") configured to drive the actuator piston (42) in a serial arrangement with respect to the translational movement direction.

14. The piston actuator (40, 40', 40") according to claim 12 or 13, wherein the piston actuator (40, 40', 40") comprises at least one spring member (46, 46', 46") and the actuator piston driving piston receiving portion (41d, 41d', 41d") is configured to be pressurized to move the actuator piston driving piston (45, 45', 45") against a spring force by the at least one spring member (46, 46', 46") in the translational movement direction, wherein the piston actuator (40, 40', 40") is configured to extend the actuator piston (42) with respect to the first piston actuator pivot (43, 43") in the translational movement direction when a force in the translational movement direction resulting from the pressure in the actuator piston driving piston receiving portion (41d, 41d', 41d") falls below the spring force in the translational movement direction.

15. The piston actuator (40') according to any one of the claims 12 to 14, wherein an actuator piston driving piston stem (45b') of the actuator piston driving piston (45') extends through the piston actuator housing (41') opposite to the partition wall (41a') in the translational movement direction with at least one actuator piston driving piston stop (45c') protruding outside the piston actuator housing (41') in a radial direction with respect to the translational movement direction and extending beyond the piston actuator housing (41') in the radial direction, and
wherein the piston actuator housing (41') comprises at least one piston actuator housing stop (41b') protruding in the radial direction with respect to the translational movement direction and facing the at least one actuator piston driving piston stop (45c') in the translational movement direction, and
wherein the at least one spring member (46') is arranged between the at least one actuator piston driving piston stop (45c') and the at least one piston actuator housing stop (41b').

16. The piston actuator (40, 40") according to any one of the claims 12 to 14, wherein an actuator piston driving piston stem (45b, 45b") of the actuator piston driving piston (45, 45") extends through the partition wall (41a, 41a") to contact and move the actuator piston (42) in the translational movement direction upon a translational movement of the actuator piston driving piston (45, 45") in the translational movement direction.

17. Vehicle comprising a brake assembly (1) according to one of the claims 1 to 11,
the vehicle is preferably configured as a commercial vehicle, a truck, a trailer, a bus and/or as a combination of a towing vehicle and a trailer, and/or wherein
the vehicle preferably comprises a pure electric, a hybrid or a conventional powertrain.
